# EUROPEAN PATENT SPECIFICATION

(11) **EP 0 367 209 B1**
(45) Date of publication and mention of the grant of the patent: **26.08.1998**
(21) Application number: 89120158.4
(22) Date of filing: 31.10.1989
(51) Int. Cl.: H05B 3/86

(54) **Electrically heatable transparency**
Elektrisch heizbare Scheibe
Vitre chaffante chauffée électriquement

(30) Priority: 27.12.1988 US 290225; 04.11.1988 US 267402
(43) Date of publication of application: 09.05.1990
(73) Proprietor: PPG INDUSTRIES, INC., Pittsburgh Pennsylvania 15272 (US)
(72) Inventor: Carter, Thomas M., Valencia Pennsylvania (US); Criss, Russell C., Pittsburgh, PA 15238 (US); Martino, Pamela L., New Kensington, PA 15068 (US); Coleman, Charles R., Pittsburgh, PA 15215 (US); Gillery, F. Howard, Allison Park, PA 15101 (US); Roginski, Amy M., New Kensington, PA 15068 (US); Winter, John A., Pittsburgh, PA 15202 (US); Wolfe, Terry L., Allison, Park, PA 15101 (US); Finley, James J., Pittsburgh, PA 15238 (US)
(74) Representative: Sternagel, Hans-Günther, Dr.

(56) References cited:
- EP-A- 0 025 755
- WO-A-88/06095
- US-A- 4 654 067
- US-A- 4 725 710

## Description

### Background of the Invention

### 1. Field of Invention

This invention relates to an electrically heatable transparency and in particular to an electrically heatable windshield with a hidden bus bar and lead arrangement.

### 2A. Technical Considerations

It has been known to pass electrical current through a transparent conductive coating on the surface of a transparency to raise its temperature. Generally, a source of electrical potential is connected to the coating by way of a pair of bus bars, each positioned along opposite sides of the transparency to be heated. The bus bars may be comprised of metallic foil strips but, in the case of glass transparencies, they preferably are comprised of a metallic, ceramic frit material fused onto a surface of the transparency. Electroconductive leads are positioned along the transparency surface to interconnect the bus bars to the electrical power source.

In fabricating heatable transparencies and, in particular heatable windshields, a ceramic enamel band may be used to underlay a portion or all of the bus bars and/or leads in an attempt to hide them from view when the windshield is observed from outside the vehicle. However, it has been found that the bus bars and leads can be seen through the ceramic band as a discoloration of the band due to the bus bar and lead material mixing with the ceramic enamel band.

Positioning the bus bar and leads completely in the ceramic enamel band to hide these members presents another problem. The electroconductive coating used for heating the transparency must bridge the portion of the ceramic band between the bus bar and the glass sheet surface. It has been found that the surface resistance of the electroconductive coating material increases over this area, resulting in higher temperatures at the band and a possibility of overheating within the windshield which may damage the plastic interlayer and, in severe cases, damage the laminated windshield, thus adversely affecting its occupant retention capability.

### 2B. Patents of interest

US-A-3,752,348 to Dickason et al.; 4,543,466, 4,668,270 and 4,743,741 to Ramus; 4,654,067 to Ramus et al.; 4,718,932 to Pharms, and 4,744,844 to Hurst teach a heatable windshield and method for making same. The bus bars and electroconductive coating of the windshield are positioned on an interior surface within the windshield assembly. US-A-4,543,466, 4,654,067 and 4,744,844 disclose bus bar configurations with portions of the bus bar completely on a ceramic paint band applied about the periphery of the glass sheet.

US-A-4,323,726 and 4,361,751 to Criss et al. teach a bus bar assembly for an electroconductive laminated window which has a relatively low electrical resistance and the ability to uniformly distribute current to an electroconductive pattern.

US-A-4,388,522 and 4,407,847 to Boaz teach an electrically heated backlight arrangement with closely spaced electrical resistance heater lines to heat the glass sheet. US-A-4,388,522 discloses a heating grid arrangement with the bus bars positioned completely on an opaque ceramic band on the backlight.

US-A-4,654,067 teaches a method for making an electrically heatable windshield of laminated construction. An opaque ceramic paint is applied to an edge portion of the surface of a glass sheet and dried. Bus bars are also applied to and dried thereon. A transparent electrically conductive coating is applied between the bus bars located on selected places. The bus bars are made from a silver ceramic material containing 86% silver, 5% borosilicate frit, 6% pine oil, and 3% polycarbonate acetate.

US-A-4,725,710 discloses an electrically heatable windshield in which heat can be concentrated in selected zones thereof. A ceramic enamel is bonded to and extends along at least two opposite edges on one surface of a glass sheet. A single bus bar is associated with the ceramic enamel on each edge of the glass sheet. Each bus bar has at least one narrow portion overlaying and bonded to an associated one of the ceramic enamel and at least one wide portion in part overlaying and bonded to an associated one of the ceramic enamel and in part overlaying and bonded to the one surface of the glass sheet. An electrically conductive coating is provided and extends between the pair of bus bars. The conductive coating which passes over the rough surface of the enamel between juxtaposed narrow portions of the bus bars has an increased resistance relative to the resistance of the conductive coating directly bonded to the glass surface. This means that the flow of energy between the bus bars is concentrated to a certain extent in areas between juxtaposed wide portions of the bus bars, thereby concentrating more heat in zones of the vision area of the windshield between such wide portions of the bus bars. The amount of heat to be concentrated in such zones can be controlled by the relative lengths of wide portions in comparison with the relative lengths of narrow portions, as well as by the roughness of the ceramic enamel.

From WO 88/06095 an electrically heated window is known, comprising :
- a glass substrate,
- an opaque enamel border bonded to a surface of said glass substrate, extending around the periphery of said transparency;
- a pair of opposing bus bars spaced from each other and bonded to said border so that the entire inner edges of said bus bars are positioned entirely on said border, and spaced from the inner edge of of said border providing an inner portion of said border which is not covered by said bus bars; and
- an electroconductive coating interconnecting said bus bars such that a portion of said coating covers said glass substrate surface, said inner portion of said border and said bus bars;
- at least one electroconductive lead electrically insulated from the coating extending from one of said bus bars along a side portion of said transparency and overlaying said border such that said border hides both of said bus bars and said lead when said border is viewed through said glass substrate.

It is the object of the invention to provide a heatable windshield which completely hides the leads and/or bus bars from the exterior of the vehicle, as well as an arrangement that minimizes overheating within the windshield due to the electroconductive coating which extends over portions of the ceramic band.

This object is acchieved by an electrically heatable transparency (20) comprising:
- a glass substrate (22);
- a border (32) bonded to a surface (30) of said glass substrate (22) extending around the periphery or said transparency (20);
- a pair of opposing bus bars (34, 36) spaced from each other and bonded to said border (32) so that the entire inner edges (38, 40) of said bus bars (34, 36) are positioned entirely on said border (32) and spaced from the inner edge of (42) of said border (32) providing an inner portion (44) of said border (32) which is not covered by said bus bars (34, 36); and
- an electroconductive coating (28) interconnecting said bus bars (34, 36) such that a portion of said coating (28) covers said glass substrate surface (30), said inner portion (44) of said border (32) and said bus bars (34, 36);
- at least one electroconductive lead (54, 56, 60, 62) electrically insultated from the coating (28) extending from one of said bus bars (34, 36) along a side portion of said transparency (20) and overlaying said border (32) such that said border (32) hides both of said bus bars (34, 36) and said lead (54, 56, 60, 62) when said border is viewed through said glass substrate (32),
characterized in that
said border (32) has been heated at a sufficiently high temperature and for a sufficient length of time to provide surface irregularities that result in an increased surface resistance of said coating (28) covering said inner portion (44) of said border (32), which increase is in the range of 50 % or less than the surface resistance of said coating (28) covering said surface (30) of said glass substrate (22).

The invention also includes a method of fabricating a heatable transparency comprising:
- cutting a glass substrate to a desired shape;
- bonding an opaque border to a surface of said glass substrate along the substrate's periphery;
- bonding a pair of opposing first and second electroconductive bus bars spaced from each other so that the entire inner edges of said bus bars are positioned entirely on said border and spaced from the inner edge of said border providing an inner portion of said border which is not covered by said bus bars;
- coating said substrate with an electroconductive coating having a predetermined surface resistance to electrically interconnect said bus bars, such that a portion of said coating covers that glass substrate surface, said bus bars; and said inner portion of said border;
- providing at least one electroconductive lead electrically insulated from the coating extending from one of said bus bars along a side portion of said transparency and overlaying said border such that said border hides both of said bus bars and said lead when said border is viewed through said glass substrate
characterized by
heating said border at a sufficiently high temperature and for a sufficient length of time to provide surface irregularities that result in an increased surface resistance of said coating over said inner portion (44) of said border, which increase is in the range of 50 % or less than the surface resistance of said coating covering said surface of said glass substrate.

The present invention provides an electrically heatable laminated transparency with a hidden bus bar configuration. A border of opaque ceramic material is bonded to an interior surface of the transparency about its periphery and opposing electroconductive bus bars are bonded to the ceramic material so that the entire inner edge of the bus bar overlays a portion of the ceramic material and is spaced from the inner edge of the border, providing an intermediate portion of the border between the bus bars and transparency surface that is not covered by the bus bars. An electroconductive coating is applied to the transparency to interconnect the bus bars. The coating covers the inner surface of the transparency, the bus bars, and the intermediate portion of the ceramic material border so that electric current flowing between the bus bars must flow through the portion of the coating that covers the intermediate portion of the border. Any increase in the measured surface resistance of the coating over the intermediate portion, when compared to the coating's surface resistance on the transparency surface, is maintained in the range of equal to or less than 50% of the coating's surface resistance measured on the transparency surface. In one particular embodiment of the invention, the border material is an enamel that is heated and bonded to the surface of the transparency under temperatures and time-at-temperature conditions that do not adversely affect the optical properties of the transparency while providing a surface irregularities that will maintain any increase in the coating's surface resistance over the border material within these acceptable limits. The enamel also resists discoloration resulting from staining by the silver, in the bus bars. The bus bars are a low frit content, silver containing ceramic material which minimizes the stress induced in the transparency due to the difference between the coefficient of thermal expansion for the bus bar material and the ceramic border and glass.

### Brief Description of the Drawings

Figure 1 is a schematic view of a windshield incorporating the features of the present invention.

Figure 2 is an exploded cross-sectional view through line 2-2 of Figure 1.

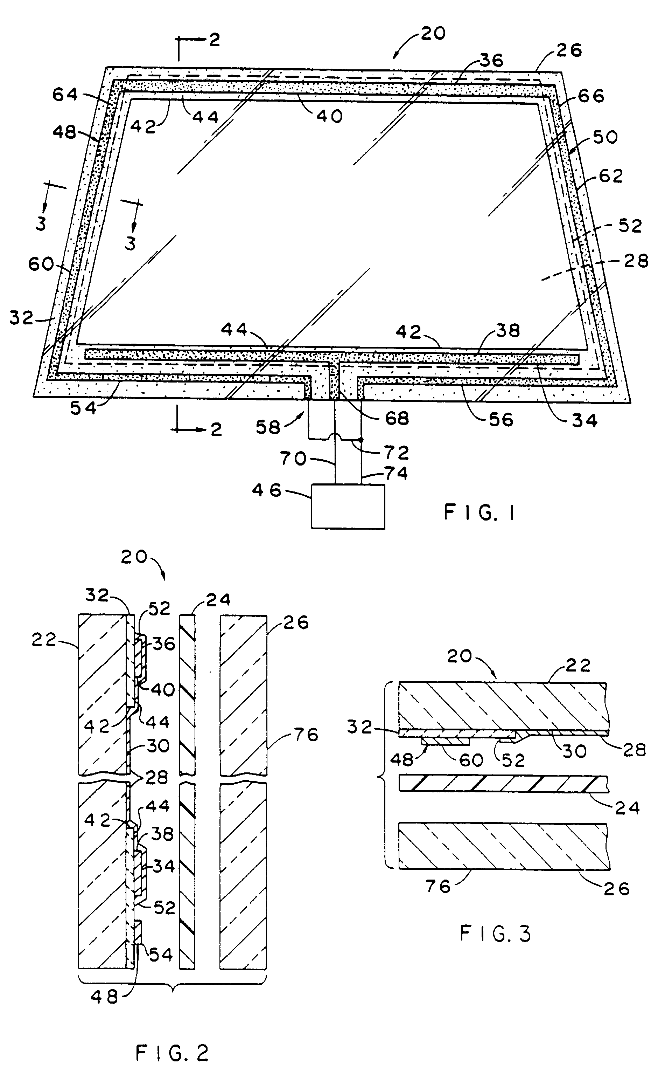

Figure 2 is an exploded cross-sectional view through line 3-3 of Figure 1.

### Detailed Description of the Invention

The description of the invention is presented in connection with a heated laminated transparency comprised of two plies of glass bonded together by an interlayer of plastic, which represents a typical windshield construction, but is should be understood that the invention can apply to heatable transparencies having a single ply of glass or plastic or any other combination involving numerous glass and/or plastic plies. The transparency is not limited for use only as an automotive windshield but may be a transparency for any type land, air, or water vehicle or other enclosure that requires heating capability.

Figures 1, 2 and 3 show a transparency 20 which includes an outboard glass sheet 22, a plastic interlayer 24 (shown only in Figures 2 and 3) which may be polyvinyl butyral as is commonly used for laminated windshields or other suitable interlayer material, and an inboard glass sheet 26 (shown only in Figures 2 and 3). An electroconductive coating 28 is preferably placed on the surface of the transparency 20 that is not exposed, most preferably on the inboard surface 30 of the outboard glass sheet 22. Various coatings may exhibit the combination of transparency and electroconductivity required to serve as the heating element for the transparency 20, but a preferred coating is similar to that disclosed in U S -A- 4,610,770 to Gillery. The coating comprises a silver film between a pair of zinc stannate films with a copper primer between the film layers, each of which may be applied sequentially by magnetron sputtering. The silver acts as the conductive layer and the zinc stannate films serve to mask the reflectance of the silver. The coating exhibits a surface resistivity on the glass surface 30 of approximately 7 to 8 ohms per square when the silver layer has a thickness of approximately 110 x 10⁻⁹ m (angstroms) and serves to heat the transparency 20 when electric current is passed through it.

An opaque border 32 such as but not limited to, a ceramic enamel, extends about the marginal edge of the transparency 20 to conceal the bus bars and other elements of the heating circuit when the transparency 20 is viewed from outside the vehicle in which it is installed, through glass ply 22, as will be discussed later, and preferably on surface 30 of glass ply 22. Although not limited in the present invention, in the particular embodiment of the invention illustrated in Figures 1, 2 and 3, power is provided to the coating 28 via a bus bar and lead arrangement.

A bottom bus bar 34 and top bus bar 36 are positioned on the border of the glass sheet 22 with inner edges 38 and 40 of the bus bars 34 and 36, respectively, entirely on the border 32 and spaced from border inner edge 42 so that the coating 28 must extend over border inner edge 42 and a border portion 44, as shown in Figure 2, to make electrical contact with the bus bars. Although not limiting in the present invention, the bus bar material is preferably a silver containing ceramic material.

Electrical connection from a power source 46 to the top bus bar 36 includes leads 48 and 50. In the particular embodiment of the invention illustrated in Figures 1, 2 and 3, the leads 48 and 50 are positioned on border 32 and include conductive strips 54 and 56, respectively, extending in opposite directions along the bottom edge of the transparency 20 from a terminal area 58 (shown only in Figure 1) and side strips 60 and 62, extending along opposite side portions of the transparency 20 and connected to strips 54 and 56, respectively. End 64 of strip 60 and end 66 of strip 62 are electrically interconnected to the opposing ends of the top bus bar 36. Electrical connection to the bottom bus bar 34 may be made in a similar fashion via lead 68. The leads 48 and 50 are electrically insulated from the coating 28 and bottom bus bar 34 in any convenient manner, such as, for example, by limiting the coating 28 on surface 30 to that area of the glass ply 22 within a boundary area 52. Referring to Figure 2, the coating 28 extends over the bottom bus bar 34 but is spaced from the lead 48. Similarly, referring to Figure 3, the coating 28 extends over a portion of border 32 but is spaced from lead 48.

Electrical connection from the power source 46 to the heatable windshield is preferably made along the lower edge at terminal area 58 (shown only in Figure 1) although it should be understood that the connections could be made at any edge and at any location along an edge. Electrical lead 70 connects the bottom bus bar lead 68 to one pole of the electrical power source 46 and leads 48 and 50 leading to the bus bar 36 may be wired in common to the opposite pole, for example, by means of a jumper wire 72 and lead 74.

As discussed earlier, because the coating 28 must extend partially over border 32, there is a potential for overheating. It has been determined that smoothness of the border material after it has been heated and fused onto the surface 30, i.e., fired, directly affects the surface resistance of the coating 28 over the border 32, and thus the ability of the coating 28 to effectively conduct current over the border 32 to the remaining portions of the coating 28 for heating the central area of the transparency 20, as well as increasing the coating temperature over the border 32. Smoothness of a surface is defined as the surface irregularities, for example, as seen under magnification by a scanning electron microscope. Referring to Figure 2, the coating 28 is applied over portion 44 of the border 32 between the bus bars 34, 36 and glass sheet surface 30. A rough border surface increases the surface resistance of the coating 28 over the portion 44, i.e., the surface resistance of the coating 28 over portion 44 of the border 32 is higher than the surface resistance of the coating 28 on the glass surface 30. As a result, when electrical current passes from a bus bar to the coating 28, the portion of the coating 28 over portion 44 restricts current flow and becomes hotter than the remaining portions of the coating 28 which, in turn, may lead to overheating and possible damage to the transparency 20. Furthermore, the reduced current diminishes the effectiveness of the coating 28's heating capability within the border 32. It is believed that this increase in surface resistance over a rough surface is due to the requirement of a coating to conform to the surface of a border during the coating operation. This condition is further aggravated during lamination of the multilayered coating, which may shear the coating layers over the portion 44 as the glass plies of the transparency are pressed together, further forcing the multilayered coating to conform to the surface of border portion 44. As a result, the smoothness of the border 32 should be such that any increase in the surface resistance of the coating 28 over the border 32 is minimized. Testing has shown that an increase in surface resistance of the coating 28 over border portion 44 of 50% or less than the surface resistance of the coating 28 covering surface 30 provides acceptable heating of the transparency 20. In the preferred embodiment of the invention, the surface resistance increase is 20% or less which provides a more uniform heating of the transparency 20, i.e. reduces the chances for high temperature "hot spots" along the ceramic border 32 and reduces the potential for thermally induced breakage.

The surface smoothness of the border 32 can be increased by heating it at a sufficiently high temperature and for a sufficient length of time to ensure adequate melting of all its materials. However, prolonged exposure to excessive heat will cause optical distortion to the glass sheet, e.g., roll ripple, making it unusable as a vehicle transparency. As a result, a major concern in determining the proper border material for the transparency 20 requires that the border material have a sufficient smoothness prior to applying coating 28 so as to reduce the coating's surface resistance increase over the border portion 44 and thus reduce overheating of the coating on the border 32 and allow adequate current flow to the coating 28, as well as providing a material that can be fired to produce the necessary smoothness at temperature and time parameters that do not adversely affect the optical properties of the glass sheet. It would be obvious to one skilled in the art that as the firing time increases, required temperature can be reduced. However, from a production standpoint, it is more advantageous to minimize the heating time to maximize output.

There are various indicators of surface smoothness. One particular indicator is the measure of the surface reflectance, or gloss, using a glossmeter which measures specular reflectance off a surface and compares it to a standard base-line reflection level. One type of glossmeter that may be used to measure surface smoothness, in terms of gloss units, is a Glossgard® glossmeter available from Gardner Laboratory Division of Pacific Scientific, Maryland, which measures gloss based on ASTM D 523 testing procedures and standards.

Another problem experienced when bus bar material is placed over the border 32 is what is commonly referred to as "bleed-through" which occurs when the silver ions in the bus bar material migrate into, i.e. stain, the ceramic enamel border 32 and/or glass sheet 22 during heating so that there is a discoloration when viewing the transparency 20 from the outside through glass sheet 22. This condition is particularly noticeable when the border 32 is a conventional windshield border enamel which is typically applied to surface 76 of glass sheet 26. When conventional windshield enamels are used on interior surface 30 of glass sheet 22, coated with an overlaying silver containing bus bar material, and subsequently subjected to elevated temperatures during firing of the bus bar material and/or bending of the glass sheet, typically in the range of (1050°F to 1250°F) 566°C to 677°C , the reheated enamel becomes soft and fluid, allowing the staining process to continue. In addition, the enamel becomes sticky so that the border will stick to a press face or an overlaying glass sheet during a glass sheet shaping operation, as will be discussed later. It has been found that bleed-through can be reduced by using tempering enamels which are enamels that can better survive exposure to high temperatures and in particular to glass sheet bending temperatures and do not become too soft or fluid during firing of the bus bars or during bending of the glass plies. Bleed-through is further reduced by drying the border material immediately after application and/or by firing the ceramic border material prior to applying the bus bar material to establish a hard ceramic barrier between the materials. It should be noted that subsequent heating of the border enamel such as during firing of the bus bar material will increase the gloss of the ceramic border. However, repeated firing of the transparency tends to increase the stresses in the glass/ceramic/bus bar cross-section due to repeated thermal cycling and the mismatch of the coefficient of expansion between the bus bar and the glass/ceramic layer, as will be discussed later.

With respect to the stresses in the glass/ceramic/bus bar cross-section, it has been observed that excessive stress at the interface between the bus bar and glass/ceramic layer during heating of transparency 20 can cause the glass to crack. This stress is due in part to the difference in the coefficient of thermal expansion between the bus bar material (principally silver) and the glass/ceramic layer (the coefficient for the glass and the ceramic border are about the same and the coefficient for silver is about twice that of the glass/ceramic layer) and the strength of the bond between the bus bar and the glass/ceramic layer. The bond strength in turn depends on the amount of frit in the bus bar material and the firing conditions. Increasing the frit content in the bus bar increases the amount of frit that is fused to the glass substrate which in turn increases the bond strength. Increasing the firing temperature promotes a more thorough melting of the frit in the bus bar material and also increases the bond strength. As the bond strength increases, the stress at the bus bar interface due to differential expansion increases. To lessen the bond, bus bar materials with reduced amounts of frit can be used and/or the materials can be heated to lower temperatures.

The stresses at the bus bar and glass/ceramic interface are also affected by the rigidity of the bus bar. An increase in the bus bar thickness and/or the amount of frit in the bus bar material will increase the structural rigidity of the bus bar and further increase the stress at the interface due to differential expansion.

It has been determined that the problem of cracking due to this difference in the coefficient of thermal expansion is minimized when the glass strength in the vicinity of the ceramic border 32 and bus bars 34 and 36 is maintained at a level of at least (12,000 psi) 8.3NT/cm² , and preferably at least (14,000 psi) 9.7NT/cm² .

In order to provide a transparency 20 with acceptable optical quality that completely hides the bus bars and leads, the border 32 enamel must be one that can be bonded onto the glass ply 22 in a sufficiently short time such that the optics of the glass ply 22 are not degraded due to excessive or prolonged heating while at the same time, require a sufficiently high firing temperature such that the enamel will not become overly soft and/or fluid when subjected to elevated temperatures during subsequent processing, for example, bending of the glass sheet. The surface of enamel must also be capable of providing the necessary smoothness required to maintain any increase in coating 28 surface resistance within the range as discussed earlier. Furthermore, the enamel must resist discoloration resulting from bleed through of the bus bars. In addition, the glass strength of the transparency 20 should be sufficiently high so as to minimize any cracking of the transparency 20 due to the mismatch of the coefficient of thermal expansion between the bus bar material and the border enamel and glass.

In the preferred embodiment of the invention, the border material is a lead borosilicate tempering enamel, such as 0. Hommel 42-841 and 43-000 enamel, available from 0. Hommel Corporation, Pennsylvania. When used in combination with a coating 28 which has a surface resistance on surface 30 of approximately 7 to 8 ohms per square, as discussed earlier, it has been found that a measured gloss reading of about 10 gloss units or greater on border portion 44 for these enamels, using a 60° Glossgard® glossmeter, calibrated to a black standard, provides an acceptable surface resistance increase of 1.4 ohms per square or less, with higher gloss readings providing less surface resistance increase. The bus bar material is preferably a low frit content, silver-containing ceramic material containing approximately 80-90% silver and 1-3% frit, by weight, and a suitable carrying medium. In one particular embodiment of the invention, the bus bar material is 84% silver and 1 1/2% frit, by weight. This bus bar and border material combination completely hides the bus bars 34 and 36 and leads 48 and 50 when viewing the transparency 20 from the outside, i.e., through outer ply 22, while providing the required glass strength and maintaining the surface resistance of the coating 28 over the border 32 within acceptable limits.

Although not limiting in the present invention, in one particular embodiment of the invention, after glass sheet 22 is cut to shape, the border 32 is applied to surface 30 of the glass sheet 22 in any convenient manner such as, for example, screen printing and fused to the glass surface 30 by firing the glass at a temperature between 593°C and 621°C (1100 and 1150° F), for approximately two to three minutes. After firing, the bus bar material is applied over the border 32 in any convenient manner such as, for example, screen printing, and the bus bar material is dried and then fired on the border 32 at a temperature between (1100°F to 1125°F) 593°C to 607°C for approximately 2 to 3 minutes. These temperature and time-at-temperature conditions are sufficient to melt the frit materials within the enamel and provide the required gloss, while at the same time maintain acceptable optical properties in the glass sheet 22. As stated earlier, the additional firing cycle of the bus bars will increase the gloss of the ceramic border 32.

The glass sheets 22 and 26 may be shaped in any convenient manner as is known in the art. For example, the sheets may be individually shaped by a press bending operation as described in US-A-4,666,492 to Thimons et al or the glass sheets may be shaped together on a bending iron (not shown) by gravity sag bending and/or pressing as disclosed in US-A-4,265,650 to Reese et al. In latter shaping operations, glass sheet 22 is covered with a removable parting medium e.g., talc, that prevents sticking of the glass sheet, ceramic border, bus bars, and leads with an overlying glass sheet. The glass sheet 22 is matched with corresponding glass sheet 26 which has a peripheral configuration slightly smaller than that of outer glass ply 22, so that after the glass sheets are shaped, the edges of the bent glass sheets which form the transparency 20 are aligned. It is believed that the combination of the parting medium and the bus bar and lead configuration prevents the glass sheets 22 and 26 from sticking during the shaping operation. In particular, the bus bars and leads act as a spacer which separates the glass surfaces in the vicinity of the ceramic band.

After shaping, the glass sheets are separated, the parting medium is removed and coating 28 is applied to surface 30 of glass sheet 22 in any convenient manner well known in the art, such as that disclosed in U S -A- 4,610,770.

After coating, the transparency 20 is assembled, placing interlayer sheet 24 between the bent glass sheets 22 and 26 and laminating the assembly into a unitary structure, in any convenient manner well known in the art.

The present invention provides a heatable transparency and in particular a heatable windshield that completely hides the bus bars and leads behind a ceramic enamel border when viewing the windshield through its outer glass ply while at the same time providing acceptable optics. In addition, the materials used in the ceramic enamel border and bus bars are matched so as to minimize the potential for glass cracking in the area of the border and overlaying bus bars due to stresses resulting from the differences in the coefficient of thermal expansion of the materials at the bus bar and glass/cermic border interface. Surface resistance of the electroconductive coating over the ceramic border is maintained at a level that will provide acceptable heating of the transparency when electric current passes through the heating coating.

## Claims

1. An electrically heatable transparency (20) comprising:
- a glass substrate (22);
- a border (32) bonded to a surface (30) of said glass substrate (22) extending around the periphery of said transparency (20);
- a pair of opposing bus bars (34, 36) spaced from each other and bonded to said border (32) so that the entire inner edges (38, 40) of said bus bars (34, 36) are positioned entirely on said border (32) and spaced from the inner edge of (42) of said border (32) providing an inner portion (44) of said border (32) which is not covered by said bus bars (34, 36): and
- an electroconductive coating (28) interconnecting said bus bars (34, 36) such that a portion of said coating (28) covers said glass substrate surface (30), said inner portion (44) of said border (32) and said bus bars (34, 36);
- at least one electroconductive lead (54, 56, 60, 62) electrically insultated from the coating (28) extending from one of said bus bars (34, 36) along a side portion of said transparency (20) and overlaying said border (32) such that said border (32) hides both of said bus bars (34, 36) and said lead (54, 56, 60, 62) when said border is viewed through said glass substrate (22),
characterized in that
said border (32) has been heated at a sufficiently high temperature and for a sufficient length of time to provide surface irregularities that result in an increased surface resistance of said coating (28) covering said inner portion (44) of said border (32), which increase is in the range of 50 % or less than the surface resistance of said coating (28) covering said surface (30) of said glass substrate (22).

2. The transparency as in claim 1,
wherein said increase in surface resistance of said coating (28) covering said inner portion (44) of said border (32) is in the range of 20 % or less than the surface resistance of said coating (28) covering said rigid substrate surface (30).

3. The transparency as in any of claims 1 and 2,
wherein said bus bar (34, 36) is a low frit content, silver containing ceramic material.

4. The transparency as in claim 3,
wherein said bus bar (34, 36) material includes approximately 80 to 90 % silver and 1 to 3 % frit, by weight, prior to being bonded to said ceramic border.

5. The transparency as in claim 4,
wherein said bus bar (34, 36) material includes approximately 84 % silver and 1.5 % frit, by weight.

6. The transparency as in any of claims 1-5,
wherein said border (32) is a lead borosilicate enamel which minimizes discoloration of said border enamel and/or said rigid substrate (22) by said bus bar material such that said border enamel hides said bus bar material when said border (32) is viewed through said rigid substrate (22).

7. The transparency as in claim 6,
wherein said border (32) is a tempering enamel.

8. The transparency as in claim 7,
wherein said inner portion (44) of said border area has an equivalent gloss of approximately 10 gloss units or more.

9. The transparency as in any of claims 1-8,
wherein the substrate (22) with said border (32) thereon has been fired at a temperature between 593°C and 621°C for two to three minutes.

10. The transparency as in any of claims 1-9
wherein said rigid substrates (22, 26) are glass and the strength of said glass in the vicinity of said border (32) and overlaying bus bars (34, 36) is at least 82.74 MPa (12,000 psi) so as to minimize cracking of said glass due to the difference in the coefficient of thermal expansion between said bus bar material and said glass coated with said border enamel.

11. The transparency as in any of claims 1-10,
wherein said transparency (20) includes additional transparent substrates (26) secured to said first glass substrate (22) to form a laminated assembly.

12. The transparency of claim 11,
wherein at least one additional substrate (26) is secured to said first glass substrate (22) such that said border (32), bus bars (34, 36) and coating (28) are between said first glass substrate (22) and said additional rigid substrate (26).

13. A method of fabricating a heatable transparency (20) comprising:
- cutting a glass substrate (22) to a desired shape;
- bonding an opaque border (32) to a surface (30) of said glass substrate (22) along the substrate's periphery;
- bonding a pair of opposing first and second electroconductive bus bars (34, 36) spaced from each other so that the entire inner edges (38, 40) of said bus bars (34, 36) are positioned entirely on said border (32) and spaced from the inner edge (42) of said border (32) providing an inner portion (44) of said border (32) which is not covered by said bus bars (34, 36);
- coating said substrate (22) with an electroconductive coating (28) having a predetermined surface resistance to electrically interconnect said bus bars (34, 36), such that a portion of said coating (28) covers that glass substrate surface (30), said bus bars (34, 36), and said inner portion (44) of said border (32);
- providing at least one electroconductive lead (54, 56, 60, 62) electrically insulated from the coating (28) extending from one of said bus bars (34, 36) along a side portion of said transparency (20) and overlaying said border (32) such that said border (32) hides both of said bus bars (34, 36) and said lead (54, 56, 60, 62) when said border (32) is viewed through said glass substrate (22)
characterized by
heating said border (32) at a sufficiently high temperature and for a sufficient length of time to provide surface irregularities that result in an increased surface resistance of said coating (28) over said inner portion (44) of said border (32), which increase is in the range of 50 % or less than the surface resistance of said coating (28) covering said surface (30) of said glass substrate (22).

14. The method as in claim 13,
wherein said border bonding step includes applying a discoloration resistant opaque ceramic enamel to said surface (30) about the periphery of said transparency (20) and heating said border enamel (32) to bond it onto said substrate surface (30) while maintaining the optical quality of said substrate (22).

15. The method as in claim 14,
wherein said border (32) is fired at a temperature between 593°C and 621°C for two to three minutes.

16. The method as in any of claims 13-15,
wherein a low frit content silver containing ceramic material is applied over said border enamel to form the bus bars (34, 36) and heating said bar material to bond said material to said border enamel while maintaining the optical quality of said substrate (22).

17. The method as in claim 16,
wherein said bus bar material having about 80 - 90 % silver and 1 - 3 % frit, by weight, to minimize cracking of said glass ply.

18. The method as in claim 13,
wherein said border (32) is a lead borosilicate enamel and is tempered to minimize border discoloration from said bus bars (34, 36).

19. The method as in claim 13,
further including the step of heating said substrate (22) and shaping said substrate (22) to a desired configuration.

20. The method as in claims 13-19,
wherein glass substrates (22, 26) are used having a strength of at least 82,74 MPa (12,000 psi) in the vicinity of said border (32) and overlaying bus bars (34, 36) so as to minimize cracking of said glass due to the difference in the coefficient of thermal expansion between said bus bar material and said-glass coated with said border enamel.

21. The method as in claim 13,
further including the step of laminating additional substrates (26) to said surface of said glass substrate (22).

22. Use of the transparency (20) of any of claims 1 to 12 or prepared by any of claims 13 to 21 as electrically heatable windshield.

## Patentansprüche

1. Elektrisch beheizbare lichtdurchlässige Scheibe (20), enthaltend:
- einen Glasträger (22),
- einen Rahmen (32), der an eine Oberfläche (30) des Glasträgers (22) gebunden ist und sich um den Rand der lichtdurchlässigen Scheibe (20) erstreckt,
- ein Paar in Abstand voneinander sich gegenüberliegende Sammelschienen (34, 36), die an den Rahmen (32) derart gebunden sind, daß die gesamten inneren Kanten (38, 40) der Sammelschienen (34, 36) sich vollständig auf dem Rahmen (32) befinden und einen Abstand von der Innenkante (42) des Rahmens (32) aufweisen, so daß ein innerer Teil (44) des Rahmens (32) geschaffen wird, der nicht von den Sammelschienen (34, 36) bedeckt ist, und
- eine elektrisch leitende Beschichtung (28), die die Sammelschienen (34, 36) miteinander verbindet, so daß ein Teil der Beschichtung (28) die Oberfläche (30) des Glasträgers, den inneren Teil (44) des Rahmens (32) und die Sammelschienen (34, 36) bedeckt,
- mindestens eine elektrisch leitende Leitung (54, 56, 60, 62), die gegenüber der Beschichtung (28) elektrisch isoliert ist, die sich von einer der Sammelschienen (34, 36) entlang eines Seitenteils der lichtdurchlässigen Scheibe (20) erstreckt und den Rahmen (32) derart überlagert, daß der Rahmen (32) beide Sammelschienen (34, 36) und die Leitung (54, 56, 60, 62) verdeckt, wenn der Rahmen (32) durch den Glasträger (22) betrachtet wird,
dadurch gekennzeichnet, daß der Rahmen (32) auf eine ausreichend hohe Temperatur und für eine ausreichend lange Zeit erwärmt wurde, um Oberflächenunregelmäßigkeiten zu schaffen, die den Oberflächenwiderstand der Beschichtung (28), die den inneren Teil (44) des Rahmens (32) bedeckt, erhöhen, wobei der Anstieg im Bereich von 50 % oder weniger des Oberflächenwiderstandes der Beschichtung (28), die die Oberfläche (30) des Glasträgers (22) bedeckt, beträgt.

2. Scheibe nach Anspruch 1, dadurch gekennzeichnet, daß der Anstieg des Oberflächenwiderstandes der Beschichtung (28), die den inneren Teil (44) des Rahmens (32) bedeckt, im Bereich von 20 % oder weniger des Oberflächenwiderstandes der Beschichtung (28), die die Oberfläche (30) des festen Trägers bedeckt, beträgt.

3. Scheibe nach einem der Ansprüche 1 und 2, dadurch gekennzeichnet, daß die Sammelschiene (34, 36) aus einem silberhaltigen keramischen Material mit niedrigem Frittegehalt ist.

4. Scheibe nach Anspruch 3, dadurch gekennzeichnet, daß das Material der Sammelschiene (34, 36) vor dem Verbinden mit dem keramischen Rahmen etwa 80 bis 90 Gew.-% Silber und 1 bis 3 Gew.-% Fritte enthält.

5. Scheibe nach Anspruch 4, dadurch gekennzeichnet, daß das Material der Sammelschiene (34, 36) etwa 84 Gew.-% Silber und 1,5 Gew.-% Fritte enthält.

6. Scheibe nach einem der Ansprüche 1 bis 5, dadurch gekennzeichnet, daß der Rahmen (32) aus einer Blei-Borsilicat-Schmelzglasur ist, die eine Verfärbung des Schmelzglasurrahmens und/oder des festen Trägers (22) durch das Sammelschienenmaterial minimiert, so daß der Schmelzglasurrahmen das Sammelschienenmaterial verdeckt, wenn der Rahmen (32) durch den festen Träger (22) betrachtet wird.

7. Scheibe nach Anspruch 6, dadurch gekennzeichnet, daß der Rahmen (32) aus einer härtenden Schmelzglasur ist.

8. Scheibe nach Anspruch 7, dadurch gekennzeichnet, daß der innere Teil (44) der Rahmenfläche einen äquivalenten Glanz von etwa 10 Glanzeinheiten oder mehr aufweist.

9. Scheibe nach einem der Ansprüche 1 bis 8, dadurch gekennzeichnet, daß der Rahmen (32) auf dem Träger (22) bei einer Temperatur zwischen 593° C und 621° C zwei bis drei Minuten lang eingebrannt wurde.

10. Scheibe nach einem der Ansprüche 1 bis 9, dadurch gekennzeichnet, daß die festen Träger (22, 26) aus Glas sind und die Festigkeit des Glases in der Nähe des Rahmens (32) und der überlagernden Sammelschienen (34, 36) mindestens 82,74 MPa (12.000 psi) beträgt, um das Brechen des Glases auf Grund des Unterschiedes der Wärmeausdehnungskoeffizienten zwischen dem Sammelschienenmaterial und dem mit dem Schmelzglasurrahmen beschichteten Glas zu minimieren.

11. Scheibe nach einem der Ansprüche 1 bis 10, dadurch gekennzeichnet, daß die lichtdurchlässige Scheibe (20) zusätzlich transparente Träger (26) aufweist, die mit dem ersten Glasträger (22) zu einem Laminataufbau fest verbunden sind.

12. Scheibe nach Anspruch 11, dadurch gekennzeichnet, daß mindestens ein zusätzlicher Träger (26) mit dem ersten Glasträger (22) so verbunden ist, daß sich der Rahmen (32), Sammelschienen (34, 36) und Beschichtung (28) zwischen dem ersten Glasträger (22) und dem zusätzlichen festen Träger (26) befinden.

13. Verfahren zum Herstellen einer beheizbaren lichtdurchlässigen Scheibe (20) durch:
- Schneiden eines Glasträgers (22) in die gewünschte Form,
- Verbinden eines opaken Rahmens (32) mit einer Oberfläche (30) des Glasträgers (22) entlang des Randes des Trägers,
- Verbinden eines Paares in Abstand voneinander sich gegenüberliegender erster und zweiter elektrisch leitender Sammelschienen (34, 36) mit dem Rahmen (32) derart, daß sich die gesamten inneren Kanten (38, 40) der Sammelschienen (34, 36) vollständig auf dem Rahmen (32) und in Abstand von der inneren Kante (42) des Rahmens (32) befinden, so daß ein innerer Teil (44) des Rahmens (32) geschaffen wird, der nicht von den Sammelschienen (34, 36) bedeckt ist,
- Beschichten des Trägers (22) mit einer elektrisch leitenden Beschichtung (28), die einen vorbestimmten Oberflächenwiderstand aufweist, um die Sammelschienen (34, 36) elektrisch so miteinander zu verbinden, daß ein Teil der Beschichtung (28) die Oberfläche (30) des Glasträgers, die Sammelschienen (34, 36) und den inneren Teil (44) des Rahmens (32) bedeckt,
- Ausbilden mindestens einer elektrisch leitenden Leitung (54, 56, 60, 62), die gegenüber der Beschichtung (28) elektrisch isoliert ist und sich von einer der Sammelschienen (34, 36) entlang eines Seitenteils der lichtdurchlässigen Scheibe (20) erstreckt und den Rahmen (32) derart überlagert, daß der Rahmen (32) beide Sammelschienen (34, 36) und die Leitung (54, 56, 60, 62) verdeckt, wenn der Rahmen (32) durch den Glasträger (22) betrachtet wird,
gekennzeichnet durch Erwärmen des Rahmens (32) auf eine ausreichend hohe Temperatur und für eine ausreichend lange Zeit, um Oberflächenunregelmäßigkeiten zu schaffen, die zu einem erhöhten Oberflächenwiderstand der Beschichtung (28) auf dem inneren Teil (44) des Rahmens (32) führen, wobei der Anstieg im Bereich von 50 % oder weniger des Oberflächenwiderstandes der Beschichtung (28), die die Oberfläche (30) des Glasträgers (22) bedeckt, beträgt.

14. Verfahren nach Anspruch 13, dadurch gekennzeichnet, daß der Schritt des Verbindens des Rahmens das Aufbringen einer verfärbungsbeständigen opaken keramischen Schmelzglasur auf die Oberfläche (30) um den Rand der lichtdurchlässigen Scheibe (20) herum und das Erwärmen des Schmelzglasurrahmens (32) einschließt, um sie mit der Oberfläche (30) des Trägers unter Beibehaltung der optischen Qualität des Trägers (22) zu verbinden.

15. Verfahren nach Anspruch 14, dadurch gekennzeichnet, daß der Rahmen (32) bei einer Temperatur zwischen 593° C und 621° C zwei bis drei Minuten lang eingebrannt wird.

16. Verfahren nach einem der Ansprüche 13 bis 15, dadurch gekennzeichnet, daß ein silberhaltiges keramisches Material mit niedrigem Frittegehalt auf den Schmelzglasurrahmen (32) aufgebracht wird, um die Sammelschienen (34, 36) auszubilden, und das Sammelschienenmaterial erwärmt wird, um das Material mit dem Schmelzglasurrahmen unter Beibehaltung der optischen Qualität des Trägers (22) zu verbinden.

17. Verfahren nach Anspruch 16, dadurch gekennzeichnet, daß das Material der Sammelschienen (34, 36) etwa 80 bis 90 Gew.-% Silber und 1 bis 3 Gew.-% Fritte enthält, um das Brechen der Glasscheibe zu minimieren.

18. Verfahren nach Anspruch 13, dadurch gekennzeichnet, daß der Rahmen (32) aus einer Blei-Borsilicat-Schmelzglasur ist und gehärtet wird, um Verfärbung des Rahmens durch die Sammelschienen (34, 36) zu minimieren.

19. Verfahren nach Anspruch 13, dadurch gekennzeichnet, daß es weiterhin den Schritt des Erwärmens des Trägers (22) und Verformen des Trägers (22) in die gewünschte Form einschließt.

20. Verfahren nach Ansprüchen 13 bis 19, gekennzeichnet durch Verwenden von Glasträgern (22, 26) mit einer Festigkeit von mindestens 82,74 MPa (12.000 psi) in der Nähe des Rahmens (32) und der überlagernden Sammelschienen (34, 36), um das Brechen des Glases auf Grund des Unterschiedes der Wärmeausdehnungskoeffizienten zwischen dem Sammelschienenmaterial und dem mit dem Schmelzglasurrahmen beschichteten Glas zu minimieren.

21. Verfahren nach Anspruch 13, dadurch gekennzeichnet, daß es weiterhin den Schritt des Laminierens zusätzlicher Träger (26) mit der Oberfläche des Glasträgers (22) einschließt.

22. Verwendung der lichtdurchlässigen Scheibe (20) nach einem der Ansprüche 1 bis 12 oder hergestellt nach einem der Ansprüche 13 bis 21 als elektrisch beheizbare Windschutzscheibe.

## Revendications

1. Vitrage transparent (20) pouvant être chauffé électriquement, comportant:
- un support en verre (22);
- une bordure (32) liée à une surface (30) dudit support en verre (22) et s'étendant à la périphérie dudit vitrage transparent (20);
- deux collecteurs opposés (34, 36) espacés l'un de l'autre et liés à ladite bordure (32) de telle sorte que la totalité des bords internes (38, 40) desdits collecteurs (34, 36) soit disposée entièrement sur ladite bordure (32) et soit espacée du bord interne (42) de ladite bordure (32), avec pour conséquence qu'une partie interne (44) de ladite bordure (32) n'est pas couverte par lesdits collecteurs (34, 36); et
- un revêtement électriquement conducteur (28) reliant lesdits collecteurs (34, 36) de telle sorte qu'une partie dudit revêtement (28) recouvre ladite surface (30) du support en verre, ladite partie interne (44) de ladite bordure (32) et lesdits collecteurs (34, 36);
- au moins un conducteur électrique (54, 56, 60, 62) isolé électriquement par rapport au revêtement (28), s'étendant depuis l'un desdits collecteurs (34, 36) le long d'une partie latérale dudit vitrage transparent (20) et recouvrant ladite bordure (32) de telle sorte que ladite bordure (32) cache les deux collecteurs (34, 36) et ledit conducteur (54, 56, 60, 62) lorsque ladite bordure est vue à travers ledit support en verre (22),
caractérisé en ce que
ladite bordure (32) a été chauffée à une température suffisamment élevée et pendant une durée suffisante pour créer des irrégularités de surface qui entraînent un accroissement de la résistance de surface dudit revêtement (28) recouvrant ladite partie interne (44) de ladite bordure (32), ledit accroissement étant dans la plage de 50% ou moins au-delà de la résistance de surface dudit revêtement (28) recouvrant ladite surface (30) dudit support en verre (22).

2. Vitrage transparent selon la revendication 1, dans lequel ledit accroissement de la résistance de surface dudit revêtement (28) recouvrant ladite partie interne (44) de ladite bordure (32) est dans la plage de 20% ou moins au-delà de la résistance de surface dudit revêtement (28) recouvrant ladite surface (30) du support rigide.

3. Vitrage transparent selon l'une quelconque des revendications 1 et 2, dans lequel ledit collecteur (34, 36) est un matériau céramique faiblement vitrifié contenant de l'argent.

4. Vitrage transparent selon la revendication 3, dans lequel le matériau dudit collecteur (34, 36) comporte environ 80 à 90% en poids d'argent et de 1 à 3% en poids de céramique vitrifiée avant d'être lié à ladite bordure en céramique.

5. Vitrage transparent selon la revendication 4, dans lequel le matériau dudit collecteur (34, 36) comporte environ 84% en poids d'argent et 1,5% en poids de céramique vitrifiée.

6. Vitrage transparent selon l'une quelconque des revendications 1 à 5, dans lequel ladite bordure (32) est un émail au borosilicate de plomb qui minimise la décoloration dudit émail de bordure et/ou dudit support rigide (22) par ledit matériau de collecteur, de telle sorte que ledit émail de bordure cache ledit matériau de collecteur lorsque ladite bordure (32) est vue à travers ledit support rigide (22).

7. Vitrage transparent selon la revendication 6, dans lequel ladite bordure (32) est en émail trempé.

8. Vitrage transparent selon la revendication 7, dans lequel ladite partie interne (44) de ladite région de bordure présente un brillant équivalent d'environ 10 unités de brillant ou plus.

9. Vitrage transparent selon l'une quelconque des revendications 1 à 8, dans lequel le support (22) portant ladite bordure (32) a été cuit à une température comprise entre 593° C et 621° C pendant deux à trois minutes.

10. Vitrage transparent selon l'une quelconque des revendications 1 à 9, dans lequel lesdits supports rigides (22, 26) sont en verre, et la résistance dudit verre au voisinage de ladite bordure (32) et des collecteurs (34, 36) qui la recouvrent est d'au moins 82,74 MPa (12.000 psi) de manière à minimiser le fendillement dudit verre dû à la différence entre les coefficients de dilatation thermique dudit matériau de collecteur et dudit verre revêtu dudit émail de bordure.

11. Vitrage transparent selon l'une quelconque des revendications 1 à 10, dans lequel ledit vitrage transparent (20) comporte des supports transparents supplémentaires (26) fixés auxdits premiers supports en verre (22) pour former un ensemble stratifié.

12. Vitrage transparent selon la revendication 11, dans lequel au moins un support supplémentaire (26) est fixé audit premier support en verre (22) de telle sorte que ladite bordure (32), lesdits collecteurs (34, 36) et ledit revêtement (28) soient situés entre ledit premier support en verre (22) et ledit support rigide supplémentaire (26).

13. Procédé de fabrication d'un vitrage transparent (20) apte à être chauffé, comportant les étapes consistant à:
- découper un support en verre (22) en une forme voulue;
- relier une bordure opaque (32) à une surface (30) dudit support en verre (22) située à la périphérie du support;
- relier un premier et un deuxième collecteur électriquement conducteurs (34, 36) opposés, espacés l'un de l'autre de telle sorte que la totalité des bords internes (38, 40) desdits collecteurs (34, 36) soit disposée entièrement sur ladite bordure (32) et soit écartée du bord interne (42) de ladite bordure (32), de telle sorte qu'une partie interne (44) de ladite bordure (32) ne soit pas couverte par lesdits collecteurs (34, 36);
- revêtir ledit support (22) d'un revêtement électriquement conducteur (28) présentant une résistance de surface prédéterminée, pour relier électriquement lesdits collecteurs (34, 36) de telle sorte qu'une partie dudit revêtement (28) recouvre cette surface (30) du support en verre, lesdits collecteurs (34, 36) et ladite partie interne (44) de ladite bordure (32);
- fournir au moins un conducteur électrique (54, 56, 60, 62) isolé électriquement du revêtement (28), s'étendant entre l'un desdits collecteurs (34, 36) le long d'une partie latérale dudit vitrage transparent (20) et recouvrant ladite bordure (32) de telle sorte que ladite bordure (32) cache lesdits deux collecteurs (34, 36) et ledit conducteur (54, 56, 60, 62) lorsque ladite bordure (32) est vue à travers ledit support en verre (22),
caractérisé en ce que
ladite bordure (32) est chauffée à une température suffisamment élevée et pendant une durée suffisante pour créer des irrégularités de surface qui entraînent un accroissement de la résistance de surface dudit revêtement (28) sur ladite partie interne (44) de ladite bordure (32), lequel accroissement est compris dans la plage de 50% ou moins au-delà de la résistance de surface dudit revêtement (28) recouvrant ladite surface (30) dudit support en verre (22).

14. Procédé selon la revendication 13, dans lequel ladite étape de fixation de la bordure comporte l'application d'un émail céramique opaque, résistant à la décoloration sur ladite surface (30) à la périphérie dudit vitrage transparent (20), et le chauffage dudit émail de bordure (32) pour le relier à ladite surface (30) du support tout en conservant la qualité optique dudit support (22).

15. Procédé selon la revendication 14, dans lequel ladite bordure (32) est cuite à une température comprise entre 593° C et 621° C pendant deux à trois minutes.

16. Procédé selon l'une quelconque des revendications 13 à 15, dans lequel un matériau céramique faiblement vitrifié contenant de l'argent est appliqué sur ledit émail de bordure pour former les collecteurs (34, 36), et comportant l'étape consistant à chauffer ledit matériau de collecteur pour lier ledit matériau audit émail de bordure tout en conservant la qualité optique dudit support (22).

17. Procédé selon la revendication 16, dans lequel ledit matériau de collecteur contient de 80 à 90% en poids d'argent et de 1 à 3% de céramique vitrifiée, pour minimiser le fendillement de ladite feuille en verre.

18. Procédé selon la revendication 13, dans lequel ladite bordure (32) est en émail de borosilicate de plomb et est cuite de manière à minimiser la décoloration de bordure par lesdits collecteurs (34, 36).

19. Procédé selon la revendication 13, comportant en outre l'étape consistant à chauffer ledit support (22) et à façonner ledit support (22) en une forme voulue.

20. Procédé selon les revendications 13 à 19, dans lequel on utilise des supports en verre (22, 26) dont la résistance est d'au moins 82,74 MPa (12.000 psi) au voisinage de ladite bordure (32), et qui recouvrent les collecteurs (34, 36) de manière à minimiser le fendillement dudit verre dû à la différence entre les coefficients de dilatation thermique dudit matériau de collecteur et dudit verre revêtu dudit émail de bordure.

21. Procédé selon la revendication 13, comportant en outre l'étape consistant à stratifier le support supplémentaire (26) sur ladite surface dudit support en verre (22).

22. Utilisation du vitrage transparent (20) selon l'une quelconque des revendications 1 à 12 ou préparé selon l'une quelconque des revendications 13 à 21, comme pare-brise pouvant être chauffé électriquement.
